# EUROPÄISCHE PATENTANMELDUNG

(11) **EP 1 416 204 A1**
(43) Veröffentlichungstag der Anmeldung: **06.05.2004**
(21) Anmeldenummer: 03017335.5
(22) Anmeldetag: 31.07.2003
(51) Int. Cl.: F16K 15/03

(54) **Rückschlagventil**

(30) Priorität: 31.10.2002 DE 20216761 U
(71) Anmelder: ROBERT BOSCH GMBH, 70442 Stuttgart (DE)
(72) Erfinder: Maerkel, Johannes, 73257 Koengen (DE); Schaefer, Albrecht, 70771 Leinfelden-Echterdingen (DE); Schmitz, Torsten, 74336 Brackenheim (DE); Boebel, Christian, 73274 Notzingen (DE); Schweitzer, Bertram, 73728 Esslingen (DE)

(57) **Zusammenfassung**

Die Erfindung betrifft eine Ventilanordnung zur Verhinderung von Rückströmungen in einem Strömungskanal mit einer Sollströmungsrichtung. Innerhalb des Strömungskanals ist ein im wesentlichen rahmenförmiger, mindestens einen freien Strömungsquerschnitt definierender Träger (12) mit einer an dessen sollströmungsabgekehrtem Randbereich zumindest teilweise umlaufenden Dichtfläche (14) angeordnet, an welcher eine an der sollströmungsabgekehrten Seite des Trägers angeordnete in und gegen die Sollströmungsrichtung bewegliche Membran (16.1,16.2) im strömungsfreien Zustand und bei einer Strömung entgegen der Sollströmungsrichtung dichtend in Anlage steht.

## Beschreibung

Die Erfindung betrifft eine Ventilanordnung zur Verhinderung von Rückströmungen in einem Strömungskanal mit einer Sollströmungsrichtung. Derartige Strömungskanäle werden bei verbrennungstechnischen Anlagen, wie beispielweise Heizungsbrennern, als Verbrennungsgemisch- oder Frischlufteintritt und als Abgasaustritt verwendet. Im normalen Betrieb einer derartigen verbrennungstechnischen Anlage tritt das Verbrennungsgemisch oder die Verbrennungsluft in die Eintrittsöffnung ein und das bei der Verbrennung entstehende Abgas verlässt die Anlage durch den Abgasaustritt.

Bei Abschalten der verbrennungstechnischen Anlage oder bei einer Funktionsstörung kann es in den Strömungskanälen zu einer Umkehr der Strömungsrichtung der Verbrennungsgase kommen. Diese Umkehr der Strömungsrichtung bei Abgas, Frischluft oder Brennstoff kann sich negativ auf die Verbrennung in der verbrennungstechnischen Anlage sowie auf deren Funktion und Lebensdauer auswirken. Ähnliche negative Einflüsse können sich durch Windströmungen oder durch die Mehrfachbelegung eines gemeinsamen Abgasweges ergeben.

### Stand der Technik

Aus der DE 958 417 ist ein Abgasventil mit Regelklappe bekannt, bei welchem an der Ausströmmündung des Ventilkörpers eine zweiflügelige Drehklappe angeordnet ist, deren Flügel zueinander- oder auseinandergeschwenkt werden können. Die Flügel sind auf einer gemeinsamen Welle gelagert und können in ihrer festgelegten Schwenkstellung manuell verstellt werden. Mit diesem Abgasventil lässt sich die Menge der strömenden Abgase regeln. Jedoch kann mit einer derartigen Ventilanordnung die Strömungsumkehr nur durch manuelles Schließen der Regelklappe verhindert werden.

Aus der DE 949 257 ist eine Abgasklappe für gasbeheizte Geräte bekannt, die durch eine Bimetallwendelfeder selbsttätig gesteuert wird. Wenn die Bimetallwendelfeder durch das heiße umströmende Abgas erwärmt wird, betätigt die sich verformende Bimetallwendelfeder die Abgasklappe und bringt diese in eine geöffnete Stellung. Bei einer Strömungsrichtungsumkehr kann eine derartige Konstruktion nur sehr träge reagieren, da ein Schließen der Abgasklappe erst durch Abkühlen der Bimetallfeder bewirkt werden kann.

Es ist Aufgabe der Erfindung, eine Ventilanordnung zur Verhinderung von Rückströmungen in einem Strömungskanal anzugeben, welche bei einem Strömungswechsel schnell reagiert und den Strömungskanal sicher verschließt. Zudem soll die erfindungsgemäße Ventilanordnung in ihrem Aufbau einfach und kostengünstig ausgeführt sein.

### Vorteile der Erfindung

Die Aufgabe wird nach der Erfindung dadurch gelöst, dass innerhalb des Strömungskanals ein im wesentlichen rahmenförmiger, mindestens einen freien Strömungsquerschnitt definierender Träger angeordnet ist, welcher eine an dessen sollströmungsabgekehrtem Randbereich zumindest teilweise umlaufende Dichtfläche aufweist. An der Dichtfläche steht eine an der sollströmungsabgekehrten Seite des Trägers angeordnete in und gegen die Sollströmungsrichtung bewegliche Membran im strömungsfreien Zustand und bei einer Strömung entgegen der Sollströmungsrichtung dichtend in Anlage.

Durch die Anordnung einer beweglichen Membran wird ein sicheres Vermeiden von Rückströmungen im Strömungskanal verhindert. Die Ventilanordnung reagiert schnell auf auftretende Strömungsänderungen, da nur kleine Massen direkt durch die Gasströmung bewegt werden. Der Aufbau ist besonders einfach und wenig störungsanfällig, da keine mechanisch bewegten Bauteile, wie etwa Scharniere, Klappen oder Führungen verwendet werden. Dadurch ergibt sich auch eine nur geringe Geräuschentwicklung im Betrieb.

Aufgrund der dichten Anlage der Membran an der umlaufenden Dichtfläche des Trägers wird eine hohe Dichtigkeit bereits bei geringen Differenzdrücken in Umkehrrichtung sichergestellt.

Die bewegliche Membran kann zumindest teilweise fest mit dem Träger oder mit einem am Träger in der Trägerebene angeordneten Befestigungssteg verbunden sein. Der Befestigungssteg ist derart angeordnet, dass er den freien Strömungsquerschnitt teilt und somit zwei durch die Membran abzudeckende Bereiche schafft. Durch diese Steganordnung wird der Strömungsquerschnitt nur wenig beeinflusst.

In besonders vorteilhafter Weise kann die Membran aus mindestens zwei getrennten Membranteilen bestehen, welche jeweils an dem Befestigungssteg befestigt sind. Die Membranteile decken dabei jeweils den durch die Anordnung des mindestens einen Befestigungssteges definierten freien Strömungsquerschnitte ab.

Um den rahmenförmigen Träger innerhalb des Strömungskanals zu stabilisieren, kann am Träger mindestens ein in der Trägerebene angeordneter Stützsteg vorgesehen sein, welcher nicht mit der beweglichen Membran fest verbunden ist.

An der beweglichen Membran können zusätzlich Stützelemente in oder auf der Membranebene angebracht oder ausgeformt sind, welche verhindern, dass sich bei geöffneter Stellung die Membran derart verformt, dass sie bei Wiederanlage an die Dichtfläche keinen ausreichende Dichtwirkung entfaltet. Zudem lassen sich durch geeignete Anordnung der Stützelemente die Steifigkeit und die Masse der Membran in gewünschter Weise beeinflussen. Dieselbe Effekte werden dadurch erreicht, dass die bewegliche Membran zumindest teilweise mit einem Stützprofil ausgeformt ist. Mit diesen Stützeinrichtungen lässt sich auch die Eigenfrequenz der Membran in der Strömung auf geeignete Weise anpassen..

Gemäß einem Grundgedanken der Erfindung kann die bewegliche aus einem Kunststoff-, Papier-, Stoff-, Elastomer- oder Gummimaterial oder einer Metallfolie oder einer Kombination derselben oder einem dergleichen elastisch verformbaren Material bestehen. Derartige Materialien sind besonders leicht und garantieren eine ausreichende Beweglichkeit der Membran.

Je nach der Ausbildung des Strömungskanals kann der Träger als kreisrunder oder ovaler Ring, als rechteckiger oder quadratischer Rahmen oder dergleichen rahmenförmig ausgeformt sein. Durch diese Formgebungen ist sichergestellt, dass ein maximaler Strömungsquerschnitt freigegeben werden kann.

Bei einer Anwendung in einer verbrennungstechnischen Anlage kann der Strömungskanal der Verbrennungsgemisch- oder Frischlufteintritt oder der Abgasaustritt der Anlage sein. Gerade bei derartigen-Anlagen muss das sichere Verhindern von Rückströmungen gewährleistet sein. Eine derartige verbrennungstechnische Anlage kann ein Industriebrenner oder ein Heizungsbrenner für flüssige oder gasförmige Brennstoffe, ein Gas- oder Ölheizkessel, ein Gas oder Öl-Brennwertkessel, eine Gas- oder Öltherme, eine Gas- und Öl- Kombitherme, ein Verbrennungsmotor oder eine Gasturbine sein.

Gemäß einer bevorzugten Ausführungsform kann der Träger waagrecht zum Querschnitt des Strömungskanals bzw. senkrecht zur Sollströmungsrichtung angeordnet sein. Jedoch kann zur Verringerung der Öffnungskräfte des Ventils der Träger auch in einem Winkel größer als 0° und kleiner als maximal 180° zur durch den Querschnitt definierten Waagrechten angeordnet sein. Somit lässt sich durch die Winkelstellung des Trägers im Strömungskanal die Öffnungskraft der Membran auf einfache Weise einstellen. Zusätzlich oder alternativ dazu können an bzw. auf der beweglichen Membran gezielt angebrachte Masseanhäufungen zur Vergrößerung der Schließkräfte der Membran angeordnet sein.

### Zeichnung

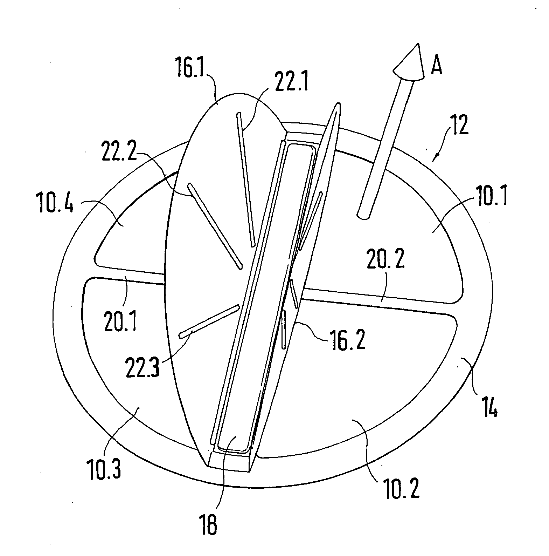

Ein Ausführungsbeispiel ist in der Zeichnung dargestellt und in der nachfolgenden Beschreibung erläutert.

### Ausführungsbeispiel

Die Figur zeigt ein Membranventil zur Verhinderung von Rückströmungen. Das Membranventil ist in einem (nicht gezeigten) Abgasaustrittsrohr eines Gas-Heizungsbrenners angeordnet. Die bei der Verbrennung von Gas entstehenden Abgase strömen in einer Sollströmungsrichtung A durch den Abgasaustritt.

Alternativ kann das Membranventil in einem Verbrennungsgemisch- oder Frischlufteintritt einer verbrennungstechnischen Anlage eingesetzt werden.

Das Membranventil weist einen rahmenförmigen, im wesentlichen runden Membranträgerteller 12 auf, der einen freien Strömungsquerschnitt definiert. Der Membranträgerteller 12 ist an seinem in Sollströmungsrichtung A abgekehrtem Randbereich mit einer umlaufenden Dichtfläche 14 versehen, an der eine ebenfalls an der sollströmungsabgekehrten Seite des Membranträgerteller 12 angeordnete in und gegen die Sollströmungsrichtung A bewegliche, zweiteilige Membran 16.1; 16.2 im strömungsfreien Zustand und bei einer Strömung entgegen der Sollströmungsrichtung A dichtend in Anlage steht.

Am Membranträgerteller 12 ist ein in der Trägerebene angeordneter, den im wesentlichen kreisrunden freien Strömungsquerschnitt des Membranträgerteller 12 in zwei halbrunde Strömungsquerschnitte teilender Befestigungssteg 18 angeordnet. Die beiden halbrunden Strömungsquerschnitte werden wiederum durch jeweils eine senkrecht zum Befestigungssteg 18 in der Trägerebene angeordnete Stützstrebe 20.1 und 20.2 geteilt. Durch die Anordnung bestehend aus dem Befestigungssteg 18 und den Stützstreben 20.1 und 20.2 wird der kreisrunden freie Strömungsquerschnitt des Membranträgerteller 12 in vier kreissegmentartige Strömungsquerschnitte 10.1, 10.2, 10.3, 10.4 aufgeteilt.

Die kreisrunde Membran ist mit dem Befestigungssteg 18 derart fest verbunden, dass der Befestigungssteg die Membran in zwei nach Art zweier Flügel bewegbare Membranteile 16.1 und 16.2 teilt. Die Membranteile 16.1 und 16.2 decken jeweils die durch die Anordnung des Befestigungssteges 18 und der Stützstreben 20.1 und 20.2 definierten freien Strömungsquerschnitte 10.1, 10.2 und 10.3, 10.4 ab.

An den beweglichen Membranteilen 16.1 und 16.2 sind sternförmig sich vom Mittelpunkt des runden Membranträgertellers 12 erstreckende, stabförmige Stützelemente 22.1; 22.2 und 22.3 in der Membranebene ausgeformt.

Die bewegliche Membran 16.1; 16.2 ist aus einem flexiblen Kunststoffmaterial hergestellt. Alternativ kann auch ein Papier-, Stoff-, Elastomer- oder Gummimaterial oder einer Metallfolie oder einer Kombination dieser Materialien verwendet werden.

Das Membranventil kann in Verbindung mit verbrennungstechnischen Anlagen, wie Industriebrennern oder Heizungsbrennern für flüssige oder gasförmige Brennstoffe, Gas- oder Ölheizkesseln, Gas oder Öl-Brennwertkesseln, Gas- oder Ölthermen, Gas- und Öl- Kombithermen, Verbrennungsmotoren oder Gasturbinen verwendet werden.

## Patentansprüche

1. Ventilanordnung zur Verhinderung von Rückströmungen in einem Strömungskanal mit einer Sollströmungsrichtung (A),
**dadurch gekennzeichnet,**
**dass** innerhalb des Strömungskanals ein im wesentlichen rahmenförmiger, mindestens einen freien Strömungsquerschnitt (10.1, 10.2, 10.3, 10.4) definierender Träger (12) mit einer an dessen sollströmungsabgekehrtem Randbereich zumindest teilweise umlaufenden Dichtfläche (14) angeordnet ist, an welcher eine an der sollströmungsabgekehrten Seite des Trägers (12) angeordnete in und gegen die Sollströmungsrichtung (A) bewegliche Membran (16.1; 16.2) im strömungsfreien Zustand und bei einer Strömung entgegen der Sollströmungsrichtung (A) dichtend in Anlage steht.

2. Ventilanordnung nach Anspruch 1,
**dadurch gekennzeichnet,**
**dass** die bewegliche Membran (16.1; 16.2) zumindest teilweise fest mit dem Träger (12) verbunden ist.

3. Ventilanordnung nach Anspruch 1 oder 2,
**dadurch gekennzeichnet,**
**dass** am Träger (12) mindestens ein in der Trägerebene angeordneter Befestigungssteg (18) vorgesehen ist, welcher den freien Strömungsquerschnitt (10.1, 10.2, 10.3, 10.4) teilt und mit welchem die bewegliche Membran (16.1; 16.2) fest verbunden ist.

4. Ventilanordnung nach Anspruch 3,
**dadurch gekennzeichnet,**
**dass** die Membran aus mindestens zwei getrennten Membranteilen (16.1 und 16.2) besteht, welche jeweils an dem mindestens einen Befestigungssteg (18) befestigt sind, wobei die Membranteile (16.1 und 16.2) jeweils den durch die Anordnung des mindestens einen Befestigungssteges (18) definierten freien Strömungsquerschnitte (10.1, 10.2, 10.3, 10.4) abdecken.

5. Ventilanordnung nach einem Ansprüche 1 bis 4,
**dadurch gekennzeichnet,**
**dass** am Träger (12) mindestens ein in der Trägerebene angeordneter Stützsteg (20.1; 20.2) vorgesehen ist, welcher nicht mit der beweglichen Membran (16.1; 16.2) fest verbunden ist..

6. Ventilanordnung nach einem der Ansprüche 1 bis 5,
**dadurch gekennzeichnet,**
**dass** an der beweglichen Membran (16.1; 16.2) Stützelemente (22.1; 22.2; 22.3) in der Membranebene angebracht oder ausgeformt sind.

7. Ventilanordnung nach einem der Ansprüche 1 bis 4,
**dadurch gekennzeichnet,**
**dass** die bewegliche Membran zumindest teilweise mit einem Stützprofil ausgeformt ist.

8. Ventilanordnung nach einem der Ansprüche 1 bis 6,
**dadurch gekennzeichnet,**
**dass** die bewegliche Membran (16.1; 16.2) aus einem Kunststoff-, Papier-, Stoff-, Elastomer- oder Gummimaterial oder einer Metallfolie oder einer Kombination derselben oder einem dergleichen elastisch verformbaren Material besteht.

9. Ventilanordnung nach-einem der Ansprüche 1 bis 7,
**dadurch gekennzeichnet,**
**dass** der Träger (12) als kreisrunder oder ovaler Ring, als rechteckiger oder quadratischer Rahmen oder dergleichen rahmenförmig ausgeformt ist.

10. Ventilanordnung nach einem der Ansprüche 1 bis 6,
**dadurch gekennzeichnet,**
**dass** der Strömungskanal der Verbrennungsgemisch- oder Frischlufteintritt oder der Abgasaustritt einer verbrennungstechnischen Anlage ist.

11. Ventilanordnung nach Anspruch 8,
**dadurch gekennzeichnet,**
**dass** die verbrennungstechnische Anlage ein Industriebrenner oder ein Heizungsbrenner für flüssige oder gasförmige Brennstoffe, ein Gas- oder Ölheizkessel, ein Gas oder Öl-Brennwertkessel, eine Gas- oder Öltherme, eine Gas- und Öl- Kombitherme, ein Verbrennungsmotor oder eine Gasturbine ist.

12. Ventilanordnung nach einem der Ansprüche 1 bis 11,
**dadurch gekennzeichnet,**
**dass** der Träger (12) waagrecht zum Querschnitt des Strömungskanals bzw. senkrecht zur Sollströmungsrichtung (A) angeordnet ist.

13. Ventilanordnung nach Anspruch 12,
**dadurch gekennzeichnet,**
**dass** der Träger (12) zur Verringerung der Öffnungskräfte des Ventils in einem Winkel zur durch den Querschnitt definierten Waagrechten angeordnet ist, welcher größer als 0° und kleiner als maximal 180° ist

14. Ventilanordnung nach einem der Ansprüche 1 bis 13,
**dadurch gekennzeichnet,**
**dass** an bzw. auf der beweglichen Membran gezielt angebrachte Masseanhäufungen zur Vergrößerung der Schließkräfte der Membran angeordnet sind.
